(19) Europäisches Patentamt
European Patent Office
Office européen des brevets

(11) EP 4 389 776 A1

(12) EUROPEAN PATENT APPLICATION

(43) Date of publication:
**26.06.2024 Bulletin 2024/26**

(21) Application number: **22215188.8**

(22) Date of filing: **20.12.2022**

(51) International Patent Classification (IPC):
***C08F 2/00*** *(2006.01)* ***C08F 4/649*** *(2006.01)*
***C08F 4/6592*** *(2006.01)* ***C08F 210/06*** *(2006.01)*

(52) Cooperative Patent Classification (CPC):
(C-Sets available)
C08F 4/65912; C08F 4/65916; C08F 210/06;
C08F 2410/05 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Borealis AG**
**1020 Vienna (AT)**

(72) Inventors:
- **LESKINEN, Pauli**
  **06101 Porvoo (FI)**
- **WANG, Jingbo**
  **4021 Linz (AT)**
- **GAHLEITNER, Markus**
  **4021 Linz (AT)**
- **BERNREITNER, Klaus**
  **4021 Linz (AT)**
- **STEMPLINGER, Josef**
  **84489 Burghausen (DE)**
- **MOOSMEIER, Leonhard**
  **84489 Burghausen (DE)**
- **ZIEGLEDER, Andreas**
  **84489 Burghausen (DE)**

(74) Representative: **Dehns**
**St. Bride's House**
**10 Salisbury Square**
**London EC4Y 8JD (GB)**

# (54) PROCESS

(57) The invention provides a process for transitioning between a Ziegler-Natta catalyst and a single site catalyst during the production of a polypropylene homo- or copolymer in a continuous multistage polymerisation reaction, wherein the process comprises the following steps, in sequential order:
a) polymerising propylene and optionally comonomers in a first reactor and thereafter in a second reactor in the presence of the Ziegler-Natta catalyst;
b) discontinuing the feed of the Ziegler-Natta catalyst into the first reactor;
c) discontinuing the feed of an external donor to the Ziegler-Natta catalyst and reducing the feed of a Ziegler-Natta co-catalyst into the first reactor, wherein step c) takes place at least 5 minutes, preferably 5 to 60 minutes after step b);
d) reducing the solid content of the second reactor from a first operating level to a transitioning level in the range of 40 to 80%, relative to the level prior to step d);
e) introducing the single site catalyst into the first reactor, wherein step e) takes place at least 30 minutes, preferably 30 minutes to 2 hours after step d); and
f) increasing the solid content of the second reactor to a second operating level, preferably to the same level as prior to step d).

EP 4 389 776 A1

(52) Cooperative Patent Classification (CPC): (Cont.)

C-Sets
**C08F 2/001, C08F 210/06;**
**C08F 210/06, C08F 2/001;**
**C08F 210/06, C08F 4/6492;**
**C08F 210/06, C08F 4/651;**
**C08F 210/06, C08F 4/653;**
**C08F 210/06, C08F 4/6546;**
**C08F 210/06, C08F 4/6548;**
**C08F 210/06, C08F 4/65927;**
C08F 210/06, C08F 210/16, C08F 2500/05,
C08F 2500/12, C08F 2500/18, C08F 2500/33,
C08F 2500/34, C08F 2500/35, C08F 2500/24

## Description

### Technical field

The present invention relates to a process of catalyst transitions in olefin polymerisations, particularly in the operation of an olefin polymerisation plant. More particularly, the present invention relates to the transition between a Ziegler-Natta catalyst and a single site catalyst in the production of polypropylene in a continuous multistage polymerisation reaction. The transition is ideally performed without the use of any catalyst deactivating agents.

### Background art

Polypropylene homopolymers and polypropylene copolymers may be formed in a polymerisation reactor in the presence of an appropriate catalyst and can be used for the preparation of numerous end products, like films, pipes and moulded articles.

One form of reactor suitable for propylene homopolymer and copolymer production is a loop reactor. Polymer particles exiting the loop reactor may be introduced into one or more subsequent polymerisation reactors, such as for example one or more gas phase reactors, for further polymerisation with other monomers, such as ethylene, to alter the physical and chemical properties of the propylene polymer resins. Additionally, the physical and chemical properties of the propylene resin may be tailored by the selection of one or more catalyst systems.

During the production of olefin polymers, like polypropylene homopolymers and polypropylene copolymers, in a commercial reactor it will often be necessary to transition from one type of catalyst system producing polymers having certain properties and characteristics to another catalyst system producing polymers having different specifications. The transition between similar or compatible catalysts generally takes place easily. However, when the catalysts are of different types and/or incompatible, e.g. it is well known that an active Ziegler-Natta catalyst may "poison" an active single site catalyst, the process is typically complicated. For example, to change from a Ziegler-Natta catalyst to a single site catalyst, or vice versa, normally requires a long transition period. Moreover, the polyolefins produced during this transition period will continuously change in properties. If the transition from one catalyst system to another requires substantial changes in reactor conditions, the risks of encountering production problems and producing polymers having extreme properties are likely.

A transition from a polymerisation reaction catalysed by a first catalyst to a polymerisation reaction catalysed by a second catalyst is usually performed by stopping the polymerisation process, emptying the reactor, recharging and then introducing the second catalyst into the reactor. Such catalyst changes are time-consuming and costly because a reactor shut-down for an extended period of time is necessary during transition.

However, a polymerisation reaction may be inhibited or stopped temporarily or permanently without emptying the reactor in a number of ways.

EP 0604993 discloses a method for the restarting of a vapour phase olefin polymerisation that has been temporarily shut down. The olefin polymerisation, utilising a Ziegler Natta catalyst, is stopped by introducing a deactivator, such as oxygen, water, carbon dioxide, carbon monoxide, alcohols or ketones. The reaction system is restarted by feeding an organoaluminium compound into the reaction system without discharging the previously formed polymer particles followed by the solid catalyst component.

WO 92/14766 describes the use of one volatile and one non-volatile catalyst killer for metallocene catalysts in a high pressure polymerisation process, which is added downstream of the polymerisation zone to suppress polymerisation of the recycling monomer and the separated molten polymer. For metallocene/aluminoxane-based catalyst systems there may also be used methanol and n-butanol as catalyst killers.

US 4460755 discloses a method of transitioning a continuous olefin polymerisation reaction catalysed by a Ziegler type catalyst into one catalysed by a chromium-based catalyst, without the need of emptying and recharging the polymerisation reactor. The procedure comprises the steps of stopping the catalyst feed, introducing a hydroxyl-containing silica which reacts with the catalyst, and finally introducing a chromium-based catalyst, while maintaining polymerisation conditions during the transition.

WO 95/26370 discloses a process for transitioning from a polymerisation reaction catalysed by a Ziegler-Natta catalyst to a metallocene catalyst. This is accomplished by a) discontinuing the feeding of the first catalyst into the reactor, b) introducing a reversible catalyst killer, c) introducing an irreversible catalyst killer, and d) feeding the second catalyst into the reactor. The Ziegler-Natta catalyst comprises silica impregnated with titanium chloride, magnesium chloride and tetrahydrofuran, and organoaluminium compounds. The metallocene catalyst comprises silica mixed with methylaluminoxane and bis-n-butylcyclopentadienyl-zirconiumdichloride and triethylaluminium as a co-catalyst. Only the transition from Ziegler-Natta catalysts to metallocene catalysts is exemplified. Carbon monoxide (CO) is used as a reversible catalyst killer and water as an irreversible catalyst killer.

In general, these prior art processes require that the first polymerisation catalyst is "killed" or substantially

deactivated. Although these technologies do mitigate problems resulting from undesirable reactions between two incompatible catalysts, these technologies may introduce other problems such as:

(i) the need to carefully control the addition of the deactivator agent (so that it does not become a poison for the new catalyst); and

(ii) the need to allow downtime for the deactivation reaction (and generally, the subsequent purging of the deactivator).

This second problem - i.e. "downtime" can cause further problems, particularly if it requires that polymer finishing operations (such as polymer degassing and pelletizing operations) be stopped and restarted. For example, the seals and/or bearings or mechanical pumps and compressors, which are used in the polymer finishing operations, may be more likely to fail during a shutdown/start-up cycle than they would otherwise be during continuous operation.

It is well known that certain pairs of different polymerisation catalysts are "incompatible", for example: one catalyst may act as a "poison" for the other; or one catalyst may have a different reactivity ratio from the other; or one catalyst may have a different "hydrogen response" in comparison to the other. Further details relating to problems caused by incompatible catalysts are set out in US 6949612.

In general, transitions between incompatible catalysts have involved large amounts of off grade polymer production and/or lost production time. Off-grade polymer material typically does not have the desired resin flow property (e.g. melt index), isotacticity or xylene solubles content, or other properties of either the initial product or the desired target product. Since off-grade polymer material presents an economic loss, it is desirable to minimize the length of time a reactor produces such material and the amount of material that is produced.

In olefin polymerisations Ziegler-Natta catalysts are frequently used. However, recent catalyst developments have resulted in use of single site catalysts (SSC), preferably metallocene catalysts, which comprise metallocene compounds of transition metals. These two types of catalysts are presently of great economic importance and therefore a time-saving transition from one of said catalysts to the other in the same polymerisation plant would be highly desirable. However, said catalysts are incompatible and a direct transition between them normally challenging.

Thus, it would be highly advantageous to find a process for transitioning between Ziegler-Natta catalysts and single site catalysts without the need for halting the polymerisation reactor to rid it of the original catalyst system and restarting the polymerisation reaction with another catalyst system and/or without the need of any catalyst deactivator (catalyst killer). In addition, it would be advantageous if the process for transitioning could reduce the amount of off-grade material produced during the transition process, reduce the transition time, and increase the robustness and stability of the transition process.

A number of methods have been described to reduce transient, off-grade polymer material. Such methods have involved feeding a polymerisation retarder or catalyst poison (e.g. $CO_2$, $O_2$) into the reactor, adjusting reaction gas composition, temperature and possibly pressure to new values, removing reactant gases from the reactor, reducing the catalyst feed rate, and/or adding a non-reactive gas such as nitrogen, among other remedial actions.

WO 2010/086392 describes a method for transitioning between two types of catalyst during the production of propylene, wherein the switch from the first to second catalyst is carried out in a prepolymerisation reactor and wherein the reaction conditions in all reactors are adapted appropriately.

Despite existing approaches to limit off-grade material, there is a continuing need and desire to provide a more effective and efficient process to reduce the amount of off-grade polymer material produced during the transition to a new product or as a result of a fluctuation during steady state manufacture.

The present invention relates to a method for the transition between a Ziegler-Natta catalyst and a single site catalyst, used in the polymerisation of propylene.

## Summary of the invention

In a first aspect, the invention provides a process for transitioning between a Ziegler-Natta catalyst and a single site catalyst during the production of a polypropylene homo- or copolymer in a continuous multistage polymerisation reaction, wherein the process comprises the following steps, in sequential order:

a) polymerising propylene and optionally comonomers in a first reactor and thereafter in a second reactor in the presence of the Ziegler-Natta catalyst;

b) discontinuing the feed of the Ziegler-Natta catalyst into the first reactor;

c) discontinuing the feed of an external donor to the Ziegler-Natta catalyst and reducing the feed of a Ziegler-Natta co-catalyst into the first reactor, wherein step c) takes place at least 5 minutes, preferably 5 to 60 minutes, after step b);

d) reducing solid content of the second reactor from a first operating level to a transitioning level in the range of 40 to 80%, relative to the first operating level prior to step d);

e) introducing the single site catalyst into the first reactor, wherein step e) takes place at least 30 minutes, preferably 30 minutes to 2 hours, after step d); and

f) increasing solid content of the second reactor to a second operating level, preferably to the same level as prior to step d).

## Detailed Description of Invention

### Ziegler-Natta (ZN) Catalyst

The Ziegler-Natta catalyst may be any Ziegler-Natta catalyst known in the art. A Ziegler-Natta type catalyst typically used in the present invention for propylene polymerisation is a stereospecific, solid high yield Ziegler-Natta catalyst component comprising compounds of Mg, Ti and Cl as well as an internal donor component. In addition to the solid catalyst component, a cocatalyst(s) and an external donor(s) are typically used in a propylene polymerisation process.

The catalyst component may be supported on a particulate support, such as an inorganic oxide, like silica or alumina, or magnesium halide may form the solid support. The solid catalyst component may be prepared by an emulsion-solidification method or by a precipitation method.

The solid catalyst component for propylene polymerisation usually comprises an internal electron donor and an aluminium compound which acts as cocatalyst. Suitable internal electron donors are, among others, esters of carboxylic acids or dicarboxylic acids, like phthalates, non-substituted or substituted malonates, non-substituted or substituted maleates, ethers and diethers or oxygen or nitrogen containing silicon compounds, or mixtures thereof.

The optional aluminium compound used in combination with the catalyst preparation is typically selected from aluminium alkyl, aluminium alkyl halide, aluminium alkyl alkoxide or aluminium alkyl halide alkoxide compounds, wherein the alkyl group contains 1 to 20 C-atoms, preferably 1 to 10 C-atoms, especially 1 to 6 C-atoms.

The cocatalyst typically comprises an aluminium trialkyl or aluminium alkyl halide compound, wherein alkyl groups typically contain 1 to 20 C-atoms, e.g. 1 to 10 C-atoms. The aluminium alkyl compound is preferably trialkyl aluminium, such as trimethylaluminium, triethylaluminium (TEAL), tri-isobutylaluminium or tri-n-octylaluminium. Aluminium alkyl halides of interest include dialkylaluminium halide, alkyl aluminium dihalide or alkyl aluminium sesquihalide, such as diethylaluminium chloride, dimethylaluminium chloride, ethylaluminium dichloride or ethylaluminium sesquichloride.

For catalyst activation, a cocatalyst is used in combination with the ZN catalyst. It is preferred if the cocatalyst is an aluminium alkyl compound. The use of TEAL is especially preferred.

It is also typical to use an external donor in the ZN polymerisation process. Suitable external electron donors used in propylene polymerisation are well known in the art and include ethers, ketones, amines, alcohols, phenols, phosphines, esters and silanes. Silane type external donors are typically organosilane compounds containing Si-OCOR, Si-OR, or Si-NR2 bonds, having silicon as the central atom, and R is an alkyl, alkenyl, aryl, arylalkyl or cycloalkyl with 1-20 carbon atoms are known in the art.

Preferred external donors are silane donors and include di-iso-propyldiethoxysilane (DIPDES), cyclohexylmethyl-diethoxysilane (CHMDES), dicyclopentyldimethoxysilane, cyclohexylmethyldimethoxysilane and dicyclopentadienyldiethoxysilane (DCPDES) and diethylaminotriethoxysilane.

Examples of suitable Ziegler-Natta catalysts are described among others, in WO 87/07620, WO 92/21705, WO 93/11165, WO 93/11166, WO 93/19100, WO 97/36939, WO 98/12234, WO 99/33842, WO 03/000756, WO 03/000757, WO 03/000754, WO 03/000755, WO 2004/029112, EP 2610271, WO 2012/007430. WO 92/19659, WO 92/19653, WO 92/19658, US 4382019, US 4435550, US 4465782, US 4473660, US 4560671, US 5539067, US5618771, EP45975, EP45976, EP45977, WO 95/32994, US 4107414, US 4186107, US 4226963, US 4347160, US 4472524, US 4522930, US 4530912, US 4532313, US 4657882, US 4581342 and US 4657882.

The Ziegler-Natta catalyst used is most preferably a solid Ziegler-Natta catalyst selected from a $MgCl_2$-supported titanium Ziegler Natta catalyst and a self-supported solid Ziegler Natta catalyst.

In general, the invention concerns a process for transitioning from a process catalysed by a generic ZN catalyst to one catalysed by a generic single site catalyst. The specific nature of the ZN catalyst is not critical although it is preferred if the ZN catalysed process involves the use of an aluminium alkyl cocatalyst compound.

**Single Site Catalyst**

The single site catalyst is preferably a metallocene or non-metallocene catalyst. Single site catalysts preferably comprise a transition metal compound which contains at least one cyclopentadienyl, indenyl or fluorenyl ligand. Preferably the single site catalyst contains two cyclopentadienyl, indenyl or fluorenyl ligands, especially two bridged cyclopentadienyl, indenyl or fluorenyl ligands. Further, the ligands may have substituents, such as alkyl groups, aryl groups, arylalkyl groups, alkylaryl groups, silyl groups, siloxy groups, alkoxy groups or other heteroatom groups. Examples of suitable metallocene compounds are given, among others, in EP 629631, EP 629632, WO 00/26266, WO 02/002576, WO 02/002575, WO 99/12943, WO 98/40331, EP 776913, EP 1074557 and WO 99/42497, EP2402353, EP2729479 and EP2746289

The single site catalyst is ideally an organometallic compound (C) comprising a transition metal (M) of Group 3 to 10 of the Periodic Table (IUPAC 2007) or of an actinide or lanthanide. The term "an organometallic compound (C)" in accordance with the present invention includes any metallocene or non-metallocene compound of a transition metal which bears at least one organic (coordination) ligand and exhibits the catalytic activity alone or together with a cocatalyst. The transition metal compounds are well known in the art and the present invention covers compounds of metals from Group 3 to 10, e.g. Group 3 to 7, or 3 to 6, such as Group 4 to 6 of the Periodic Table, (IUPAC 2007), as well as lanthanides or actinides.

In one embodiment the organometallic compound (C) has the following formula (I):

$$(L)_mR_nMX_q \qquad (I)$$

wherein

"M" is a transition metal (M) transition metal (M) of Group 3 to 10 of the Periodic Table (IUPAC 2007),

each "X" is independently a monoanionic ligand, such as a σ-ligand,

each "L" is independently an organic ligand which coordinates to the transition metal "M",

"R" is a bridging group linking said organic ligands (L),

"m" is 1, 2 or 3, preferably 2

"n" is 0, 1 or 2, preferably 1,

"q" is 1, 2 or 3, preferably 2 and

m+q is equal to the valency of the transition metal (M).

"M" is preferably selected from the group consisting of zirconium (Zr), hafnium (Hf), or titanium (Ti), more preferably selected from the group consisting of zirconium (Zr) and hafnium (Hf).

In a more preferred definition, each organic ligand (L) is independently:

(a) a substituted or unsubstituted cyclopentadienyl or a bi- or multicyclic derivative of a cyclopentadienyl which optionally bear further substituents and/or one or more hetero ring atoms from a Group 13 to 16 of the Periodic Table (IUPAC); or

(b) an acyclic $\eta^1$- to $\eta^4$- or $\eta^6$-ligand composed of atoms from Groups 13 to 16 of the Periodic Table, and in which the open chain ligand may be fused with one or two, preferably two, aromatic or non-aromatic rings and/or bear further substituents; or

(c) a cyclic $\eta^1$- to $\eta^4$- or $\eta^6$-, mono-, bi- or multidentate ligand composed of unsubstituted or substituted mono-, bi- or multicyclic ring systems selected from aromatic or non-aromatic or partially saturated ring systems, such ring systems containing optionally one or more heteroatoms selected from Groups 15 and 16 of the Periodic Table.

Organometallic compounds (C) preferably have at least one organic ligand (L) belonging to the group (a) above. Such organometallic compounds are called metallocenes.

More preferably at least one of the organic ligands (L), preferably both organic ligands (L), is (are) selected from the group consisting of cyclopentadienyl, indenyl, tetrahydroindenyl, fluorenyl, which can be independently substituted or unsubstituted.

Further, in case the organic ligands (L) are substituted it is preferred that at least one organic ligand (L), preferably both organic ligands (L), comprise one or more substituents independently selected from $C_1$ to $C_{20}$ hydrocarbyl or silyl groups, which optionally contain one or more heteroatoms selected from groups 14 to 16 and/or are optionally substituted by halogen atom(s),

The term "$C_1$ to $C_{20}$ hydrocarbyl group", whenever used in the present application, includes $C_1$ to $C_{20}$ alkyl, $C_2$ to $C_{20}$ alkenyl, $C_2$ to $C_{20}$ alkynyl, $C_3$ to $C_{20}$ cycloalkyl, $C_3$ to $C_{20}$ cycloalkenyl, $C_6$ to $C_{20}$ aryl, $C_7$ to $C_{20}$ alkylaryl or $C_7$ to $C_{20}$ arylalkyl groups or mixtures of these groups such as cycloalkyl substituted by alkyl.

Further, two substituents, which can be the same or different, attached to adjacent C-atoms of a ring of the ligands (L) can also be taken together form a further mono or multicyclic ring fused to the ring.

Preferred hydrocarbyl groups are independently selected from linear or branched $C_1$ to $C_{10}$ alkyl groups, optionally interrupted by one or more heteroatoms of groups 14 to 16, like O, N or S, and substituted or unsubstituted $C_6$ to $C_{20}$ aryl groups.

Linear or branched $C_1$ to $C_{10}$ alkyl groups, optionally interrupted by one or more heteroatoms of groups 14 to 16, are more preferably selected from methyl, ethyl, propyl, isopropyl, tertbutyl, isobutyl, $C_{5-6}$ cycloalkyl, OR, SR, where R is $C_1$ to $C_{10}$ alkyl group.

$C_6$ to $C_{20}$ aryl groups are more preferably phenyl groups, optionally substituted with 1 or 2 $C_1$ to $C_{10}$ alkyl groups as defined above.

By "σ-ligand" is meant throughout the invention a group bonded to the transition metal (M) via a sigma bond.

Further, the ligands "X" are preferably independently selected from the group consisting of hydrogen, halogen, $C_1$ to $C_{20}$ alkyl, $C_1$ to $C_{20}$ alkoxy, $C_2$ to $C_{20}$ alkenyl, $C_2$ to $C_{20}$ alkynyl, $C_3$ to $C_{12}$ cycloalkyl, $C_6$ to $C_{20}$ aryl, $C_6$ to $C_{20}$ aryloxy, $C_7$ to $C_{20}$ arylalkyl, $C_7$ to $C_{20}$ arylalkenyl, -SR", $-PR"_3$, $-SiR"_3$, $-OSiR"_3$ and $-NR"_2$, wherein each R" is independently hydrogen, $C_1$ to $C_{20}$ alkyl, $C_2$ to $C_{20}$ alkenyl, $C_2$ to $C_{20}$ alkynyl, $C_3$ to $C_{12}$ cycloalkyl or $C_6$ to $C_{20}$ aryl.

More preferably, the "X" ligands are selected from halogen, $C_1$ to $C_6$alkyl, $C_5$ to $C_6$cycloalkyl, $C_1$ to $C_6$ alkoxy, phenyl and benzyl groups.

The bridging group "R" may be a divalent bridge, preferably selected from $-R'_2C-$, $-R'_2C-CR'_2-$, $-R'_2Si-$, $-R'_2Si-Si R'_2-$, $-R'_2Ge-$, wherein each R' is independently a hydrogen atom, $C_1$ to $C_{20}$ alkyl, $C_2$ to $C_{10}$ cycloalkyl, tri($C_1$-$C_{20}$-alkyl)silyl, $C_6$- $C_{20}$-aryl, $C_7$- $C_{20}$ arylalkyl and $C_7$- $C_{20}$-alkylaryl .

More preferably the bridging group "R" is a divalent bridge selected from $-R'_2C-$, $-R'_2Si-$, wherein each R' is independently a hydrogen atom, $C_1$ to $C_{20}$ alkyl, $C_2$ to $C_{10}$ cycloalkyl, $C_6$-$C_{20}$-aryl, $C_7$- $C_{20}$ arylalkyl and $C_7$- $C_{20}$-alkylaryl.

Another subgroup of the organometallic compounds (C) of formula (I) is known as non-metallocenes wherein the transition metal (M), preferably a Group 4 to 6 transition metal, suitably Ti, Zr or Hf, has a coordination ligand other than a cyclopentadienyl ligand.

The term "non-metallocene" used herein means compounds, which bear no cyclopentadienyl ligands or fused derivatives thereof, but one or more non-cyclopentadienyl η-, or σ-, mono-, bi- or multidentate ligand. Such ligands can be chosen e.g. from the groups (b) and (c) as defined above and described e.g. in WO 01/70395, WO 97/10248, WO 99/41290, and WO 99/10353), and further in V. C. Gibson et al., in Angew. Chem. Int. Ed., engl., vol 38, 1999, pp 428 447, the disclosures of which are incorporated herein by reference.

However, the organometallic compound (C) of the present invention is preferably a metallocene as defined above.

Metallocenes are described in numerous patents. In the following just a few examples are listed; EP 260 130, WO 97/28170, WO 98/46616, WO 98/49208, WO 98/040331, WO 99/12981, WO 99/19335, WO 98/56831, WO 00/34341, WO00/148034, EP 423 101, EP 537 130, WO2002/02576, WO2005/105863, WO 2006097497, WO2007/116034, WO2007/107448, WO2009/027075, WO2009/054832, WO 2012/001052, and EP 2532687, the disclosures of which are incorporated herein by reference. Further, metallocenes are described widely in academic and scientific articles.

In a preferred embodiment the organometallic compound (C) has the following formula (Ia):

$$(L)_2R_nMX_2 \qquad (Ia)$$

wherein

"M" is Zr or Hf;

each "X" is a σ-ligand;

each "L" is an optionally substituted cyclopentadienyl, indenyl or tetrahydroindenyl;

"R" is $SiMe_2$ bridging group linking said organic ligands (L);

"n" is 0 or 1, preferably 1.

The metallocene catalyst complexes of the invention are preferably asymmetrical. Asymmetrical means simply that the two ligands forming the metallocene are different, that is, each ligand bears a set of substituents that are chemically different.

The metallocene catalyst complexes of the invention are typically chiral, racemic bridged bisindenyl $C_1$-symmetric metallocenes in their anti-configuration. Although such complexes are formally $C_1$-symmetric, the complexes ideally retain a pseudo-$C_2$-symmetry since they maintain $C_2$-symmetry in close proximity of the metal center although not at the ligand periphery. By nature of their chemistry both anti and syn enantiomer pairs (in case of $C_1$-symmetric complexes) are formed during the synthesis of the complexes. For the purpose of this invention, racemic-anti means that the two indenyl ligands are oriented in opposite directions with respect to the cyclopentadienyl-metal-cyclopentadienyl plane, while racemicsyn means that the two indenyl ligands are oriented in the same direction with respect to the cyclopentadienyl-metal-cyclopentadienyl plane, as shown in the scheme below.

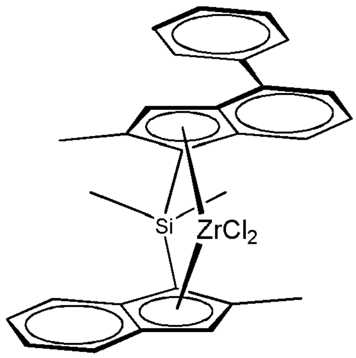

Racemic Anti

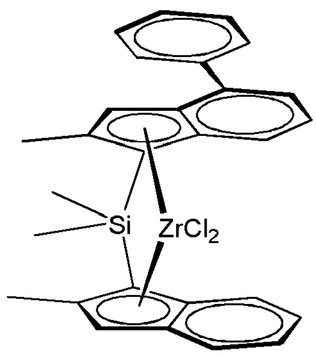

Racemic Syn

Formula (I), and any sub formulae, are intended to cover both syn- and anti-configurations. Preferred metallocene catalyst complexes are in the anti configuration.

The metallocene catalyst complexes of the invention are generally employed as the racemic-anti isomers. Ideally, therefore at least 95%mol, such as at least 98%mol, especially at least 99%mol of the metallocene catalyst complex is in the racemic-anti isomeric form.

More preferably, the single site catalyst is of formula (II):

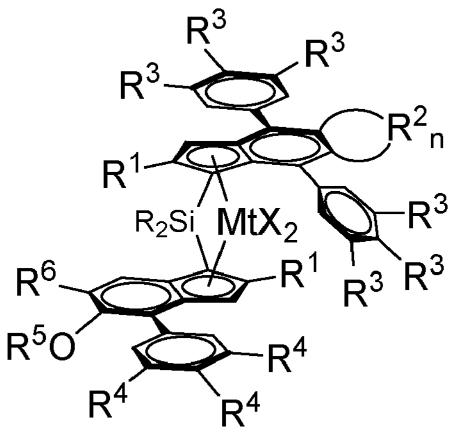

Formula (II)

Mt is Hf or Zr;

each X is a sigma-ligand;

each $R^1$ independently are the same or can be different and are a $CH_2$-$R^7$ group, with $R^7$ being H or linear or branched $C_{1-6}$-alkyl group, $C_{3-8}$ cycloalkyl group, $C_{6-10}$ aryl group,

each $R^2$ is independently a -CH=, -CY=, -$CH_2$-, -CHY- or -$CY_2$- group, wherein Y is a $C_{1-10}$ hydrocarbyl group and where n is 2-6,

each $R^3$ and $R^4$ are independently the same or can be different and are hydrogen, a linear or branched $C_1$-$C_6$-alkyl group, an OY group or a $C_{7-20}$ arylalkyl, $C_{7-20}$ alkylaryl group or $C_{6-20}$ aryl group, whereby at least one $R^3$ per phenyl group and at least one $R^4$ is not hydrogen, and optionally two adjacent $R^3$ or $R^4$ groups can be part of a ring including the phenyl carbons to which they are bonded,

$R^5$ is a linear or branched $C_1$-$C_6$-alkyl group, $C_{7-20}$ arylalkyl, $C_{7-20}$ alkylaryl group or $C_6$-$C_{20}$-aryl group,

$R^6$ is a $C(R^8)_3$ group, with $R^8$ being a linear or branched $C_1$-$C_6$ alkyl group, and

each R is independently a $C_1$-$C_{20}$-hydrocarbyl.

It is preferred if Mt is Zr.

Preferably, each X is independently a hydrogen atom, a halogen atom, $C_{1-6}$ alkoxy group or an R' group, where R' is a $C_{1-6}$ alkyl, phenyl or benzyl group. Most preferably, X is chlorine, benzyl or a methyl group. Preferably, both X groups are the same. The most preferred options are two chlorides, two methyl or two benzyl groups, especially two chlorides.

Each R is independently a $C_1$-$C_{20}$-hydrocarbyl, $C_6$-$C_{20}$-aryl, $C_7$-$C_{20}$-arylalkyl or $C_7$-$C_{20}$-alkylaryl. The term $C_{1-20}$ hydrocarbyl group therefore includes $C_{1-20}$ alkyl, $C_{2-20}$ alkenyl, $C_{2-20}$ alkynyl, $C_{3-20}$ cycloalkyl, $C_{3-20}$ cycloalkenyl, aryl groups, $C_{7-20}$ alkylaryl groups or $C_{7-20}$ arylalkyl groups or of course mixtures of these groups such as cycloalkyl substituted by alkyl. Unless otherwise stated, preferred $C_{1-20}$ hydrocarbyl groups are $C_{1-20}$ alkyl, $C_{4-20}$ cycloalkyl, $C_{5-20}$ cycloalkyl-alkyl groups, $C_{7-20}$ alkylaryl groups, $C_{7-20}$ arylalkyl groups or aryl groups.

Preferably, both R groups are the same. It is preferred if R is a $C_1$-$C_{10}$-hydrocarbyl or $C_6$-$C_{10}$-aryl group, such as methyl, ethyl, propyl, isopropyl, tertbutyl, isobutyl, $C_{5-6}$-cycloalkyl, cyclohexylmethyl, phenyl or benzyl, more preferably both R are a $C_1$-$C_6$-alkyl, $C_{3-8}$ cycloalkyl or $C_6$-aryl group, such as a $C_1$-$C_4$-alkyl, C5-6 cycloalkyl or $C_6$-aryl group and most preferably both R are methyl or one is methyl and another cyclohexyl. Most preferably the bridge is - $Si(CH_3)_2$-.

Each $R^1$ independently are the same or can be different and are a $CH_2$-$R^7$ group, with $R^7$ being H or linear or branched $C_{1-6}$-alkyl group, like methyl, ethyl, n-propyl, i-propyl, n-butyl, i-butyl, sec.-butyl and tert-butyl or $C_{3-8}$ cycloalkyl group (e.g. cyclohexyl), $C_{6-10}$ aryl group (preferably phenyl).

Preferably, both $R^1$ are the same and are a $CH_2$-$R^7$ group, with $R^7$ being H or linear or branched $C_1$-$C_4$-alkyl group, more preferably, both $R^1$ are the same and are a $CH_2$-$R^7$ group, with $R^7$ being H or linear or branched $C_1$-$C_3$-alkyl group. Most preferably, both $R^1$ are both methyl.

Each $R^2$ is independently a -CH=, -CY=, -$CH_2$-, -CHY- or -$CY_2$- group, wherein Y is a $C_{1-10}$ hydrocarbyl group, preferably a $C_{1-4}$ hydrocarbyl group and where n is 2-6, preferably 3-4.

Each substituent $R^3$ and $R^4$ are independently the same or can be different and are hydrogen, a linear or branched $C_1$-$C_6$-alkyl group, an OY group or a $C_{7-20}$ arylalkyl, $C_{7-20}$ alkylaryl group or $C_{6-20}$ aryl group, preferably hydrogen, a linear or branched $C_1$-$C_6$-alkyl group or aryl groups, and optionally two adjacent $R^3$ or $R^4$ groups can be part of a ring including the phenyl carbons to which they are bonded. More preferably, $R^3$ and $R^4$ are hydrogen or a linear or branched $C_1$-$C_4$ alkyl group or a OY-group, wherein Y is a is a $C_{1-4}$ hydrocarbyl group. Even more preferably, each $R^3$ and $R^4$ are independently hydrogen, methyl, ethyl, isopropyl, tert-butyl or methoxy, especially hydrogen, methyl or tert-butyl, whereby at least one $R^3$ per phenyl group and at least one $R^4$ is not hydrogen.

Thus, preferably one or two $R^3$ per phenyl group are not hydrogen, more preferably on both phenyl groups the $R^3$ are the same, like 3',5'-di-methyl or 4'- tert-butyl for both phenyl groups.

For the indenyl moiety preferably one or two $R^4$ on the phenyl group are not hydrogen, more preferably two $R^4$ are not hydrogen and most preferably these two $R^4$ are the same like 3',5'-di-methyl or 3',5'-di-tert-butyl.

$R^5$ is a linear or branched $C_1$-$C_6$-alkyl group such as methyl, ethyl, n-propyl, i-propyl, n-butyl, i-butyl, sec-butyl and tert-butyl, $C_{7-20}$ arylalkyl, $C_{7-20}$ alkylaryl group or $C_6$-$C_{20}$ aryl group.

$R^5$ is a preferably a linear or branched $C_1$-$C_6$ alkyl group or aryl group, more preferably a linear $C_1$-$C_4$ alkyl group, even more preferably a $C_1$-$C_2$ alkyl group and most preferably methyl.

$R^6$ is a $C(R^8)_3$ group, with $R^8$ being a linear or branched $C_1$-$C_6$ alkyl group. Preferably each $R^8$ are the same or different with $R^8$ being a linear or branched $C_1$-$C_4$-alkyl group, more preferably with $R^8$ being the same and being a $C_1$-$C_2$-alkyl group. Most preferably, all $R^8$ groups are methyl.

In a further preferred embodiment the organometallic compound (C) has the following formula (III):

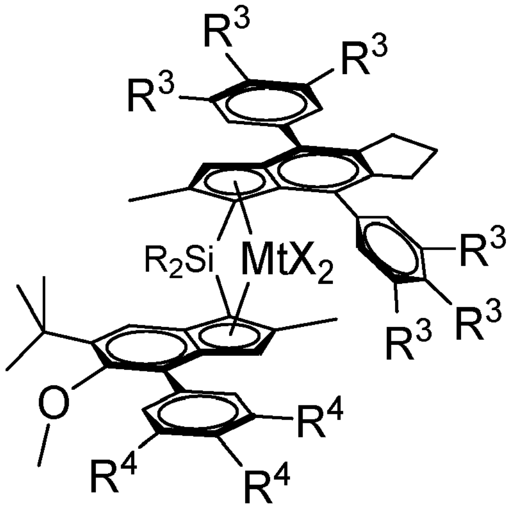

Formula (III)

wherein

Mt is Zr or Hf, preferably Zr;
each $R^3$ and $R^4$ are independently the same or can be different and are hydrogen or a linear or branched $C_1$-$C_6$-alkyl group, whereby at least on $R^3$ per phenyl group and at least one $R^4$ is not hydrogen.

Specific metallocene catalyst complexes of the invention include:
rac-anti-dimethylsilanediyl[2-methyl-4,8-bis-(4'-tert-butylphenyl)-1,5,6,7-tetrahydro-s-indacen-1-yl][2-methyl-4-(3',5'-dimethyl-phenyl)-5-methoxy-6-tert-butylinden-1-yl] zirconium dichloride (MC-1);
rac-anti-dimethylsilanediyl[2-methyl-4,8-bis-(3',5'-dimethylphenyl)-1,5,6,7-tetrahydro-s indacen-1-yl] [2-methyl-4-(3',5'-dimethylphenyl)-5-methoxy-6-tert-butylinden-1-yl] zirconium dichloride (MC-2); and
rac-anti-dimethylsilanediyl[2-methyl-4,8-bis-(3',5'-dimethylphenyl)-1,5,6,7-tetrahydro-s-indacen-1-yl][2-methyl-4-(3',5'-ditert-butyl-phenyl)-5-methoxy-6-tert-butylinden-1-yl] zirconium dichloride (MC-3); or their corresponding zirconium dimethyl analogues.

| | | |
|---|---|---|
| 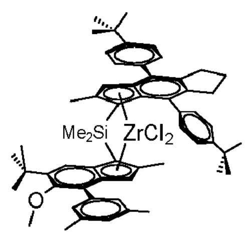 | 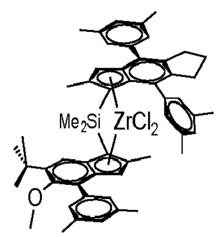 | 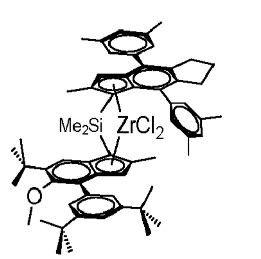 |
| **MC-1** | **MC-2** | **MC-3** |

Throughout the disclosure above, where a narrower definition of a substituent is presented, that narrower definition is deemed disclosed in conjunction with all broader and narrower definitions of other substituents in the application.

Synthesis

The ligands required to form the single site catalysts of the invention can be synthesised by any process and the skilled organic chemist would be able to devise various synthetic protocols for the manufacture of the necessary ligand materials. WO2007/116034, for example, discloses the necessary chemistry. Synthetic protocols can also generally be found in WO2002/02576, WO2011/135004, WO2012/084961, WO2012/001052, WO2011/076780 and WO2015/158790.

To form an active single site catalytic species it is normally necessary to employ a cocatalyst as is well known in the art. According to the present invention a cocatalyst system comprising a boron containing cocatalyst and/or an aluminoxane cocatalyst is used in combination with the above defined metallocene catalyst complex.

The aluminoxane cocatalyst can be one of formula (X):

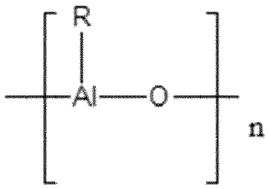

(X)

where n is usually from 6 to 20 and R has the meaning below.

Aluminoxanes are formed on partial hydrolysis of organoaluminum compounds, for example those of the formula $AlR_3$, $AlR_2Y$ and $Al_2R_3Y_3$ where R can be, for example, $C_1$-$C_{10}$ alkyl, preferably $C_1$-$C_5$ alkyl, or $C_3$-$_{10}$ cycloalkyl, $C_7$-$C_{12}$ arylalkyl or alkylaryl and/or phenyl or naphthyl, and where Y can be hydrogen, halogen, preferably chlorine or bromine, or C1-C10 alkoxy, preferably methoxy or ethoxy. The resulting oxygen-containing aluminoxanes are not in general pure compounds but mixtures of oligomers of the formula (X).

The preferred aluminoxane is methylaluminoxane (MAO). Since the aluminoxanes used according to the invention as cocatalysts are not, owing to their mode of preparation, pure compounds, the molarity of aluminoxane solutions hereinafter is based on their aluminium content.

According to the present invention, also a boron containing cocatalyst can be used instead of the aluminoxane cocatalyst or the aluminoxane cocatalyst can be used in combination with a boron containing cocatalyst.

It will be appreciated by the skilled person that where boron based cocatalysts are employed, it is normal to pre-alkylate the complex by reaction thereof with an aluminium alkyl compound, such as TIBA. This procedure is well known and any suitable aluminium alkyl, e.g. $Al(C_{1-6}\text{-alkyl})_3$ can be used. Preferred aluminium alkyl compounds are triethylaluminium, tri-isobutylaluminium, tri-isohexylaluminium, tri-n-octylaluminium and tri-isooctylaluminium.

Alternatively, when a borate cocatalyst is used, the metallocene catalyst complex is in its alkylated version, that is for example a dimethyl or dibenzyl metallocene catalyst complex can be used.

Boron based cocatalysts of interest include those of formula (Z)

$$BY_3 \qquad (Z)$$

wherein Y is the same or different and is a hydrogen atom, an alkyl group of from 1 to about 20 carbon atoms, an aryl group of from 6 to about 15 carbon atoms, alkylaryl, arylalkyl, haloalkyl or haloaryl each having from 1 to 10 carbon atoms in the alkyl radical and from 6-20 carbon atoms in the aryl radical or fluorine, chlorine, bromine or iodine. Preferred examples for Y are methyl, propyl, isopropyl, isobutyl or trifluoromethyl, unsaturated groups such as aryl or haloaryl like phenyl, tolyl, benzyl groups, p-fluorophenyl, 3,5- difluorophenyl, pentachlorophenyl, pentafluorophenyl, 3,4,5-trifluorophenyl and 3,5- di(trifluoromethyl)phenyl.

Preferred options are trifluoroborane, triphenylborane, tris(4-fluorophenyl)borane, tris(3,5-difluorophenyl)borane, tris(4-fluoromethylphenyl)borane, tris(2,4,6-trifluorophenyl)borane, tris(penta-fluorophenyl)borane, tris(tolyl)borane, tris(3,5-dimethyl-phenyl)borane, tris(3,5-difluorophenyl)borane and/or tris (3,4,5-trifluorophenyl)borane.

Particular preference is given to tris(pentafluorophenyl)borane.

However, it is preferred that borates are used, i.e. compounds containing a borate 3+ ion. Such ionic cocatalysts preferably contain a non-coordinating anion such as tetrakis(pentafluorophenyl)borate and tetraphenylborate. Suitable counterions are protonated amine or aniline derivatives such as methylammonium, anilinium, dimethylammonium, diethylammonium, N- methylanilinium, diphenylammonium, N,N-dimethylanilinium, trimethylammonium, triethylammonium, tri-n-butylammonium, methyldiphenylammonium, pyridinium, p-bromo-N,N- dimethylanilinium or p-nitro-N,N-dimethylanilinium.

Preferred ionic compounds which can be used according to the present invention include: triethylammoniumtetra(phenyl)borate,

tributylammoniumtetra(phenyl)borate,

trimethylammoniumtetra(tolyl)borate,

tributylammoniumtetra(tolyl)borate,

tributylammoniumtetra(pentafluorophenyl)borate,

tripropylammoniumtetra(dimethylphenyl)borate,

tributylammoniumtetra(trifluoromethylphenyl)borate,

tributylammoniumtetra(4-fluorophenyl)borate,

N,N-dimethylcyclohexylammoniumtetrakis(pentafluorophenyl)borate,

N, N-dimethylbenzylammoniumtetrakis(pentafluorophenyl)borate,

N,N-dimethylaniliniumtetra(phenyl)borate,

N, N-diethylaniliniumtetra(phenyl)borate,

N, N-dimethylaniliniumtetrakis(pentafluorophenyl)borate,

N, N-di(propyl)ammoniumtetrakis(pentafluorophenyl)borate,

di(cyclohexyl)ammoniumtetrakist(pentafluorophenyl)borate,

triphenylphosphoniumtetrakis(phenyl)borate,

triethylphosphoniumtetrakis(phenyl)borate,

diphenylphosphoniumtetrakis(phenyl)borate,

tri(methylphenyl)phosphoniumtetrakis(phenyl)borate,

tri(dimethylphenyl)phosphoniumtetrakis(phenyl)borate,

triphenylcarbeniumtetrakis(pentafluorophenyl)borate,

or ferroceniumtetrakis(pentafluorophenyl)borate.

Preference is given to triphenylcarbeniumtetrakis(pentafluorophenyl) borate,

N,N- dimethylcyclohexylammoniumtetrakis(pentafluorophenyl)borate or

N,N- dimethylbenzylammoniumtetrakis(pentafluorophenyl)borate.

It has been surprisingly found that certain boron cocatalysts are especially preferred. Preferred borates of use in the invention therefore comprise the trityl ion. Thus the use of N,N-dimethylammonium-tetrakispentafluorophenylborate and $Ph_3CB(PhF_5)_4$ and analogues therefore are especially favoured.

According to the present invention, the preferred cocatalysts are alumoxanes, more preferably methylalumoxanes, combinations of alumoxanes with Al-alkyls, boron or borate cocatalysts and combination of alumoxanes with boron-based cocatalysts.

According to the most preferred embodiment of present invention, the preferred cocatalysts are alumoxanes, most preferably methylalumoxanes.

Suitable amounts of cocatalyst will be well known to the skilled person. The molar ratio of boron to the metal ion of the metallocene may be in the range 0.5:1 to 10:1 mol/mol, preferably 1:1 to 10:1, especially 1:1 to 5:1 mol/mol.

The molar ratio of Al in the aluminoxane to the metal ion of the metallocene may be in the range 1:1 to 2000:1 mol/mol, preferably 10:1 to 1000:1, and more preferably 50:1 to 500:1 mol/mol.

Catalyst Manufacture

The single site (preferably metallocene) catalyst complex can be used in supported or unsupported form. The particulate support material used is preferably an organic or inorganic material, such as silica, alumina or zirconia or a mixed oxide such as silica-alumina, in particular silica, alumina or silica-alumina. The use of a silica support is preferred. The skilled person is aware of the procedures required to support such a catalyst.

Especially preferably the support is a porous material so that the complex may be loaded into the pores of the support, e.g. using a process analogous to those described in WO94/14856, WO95/12622 and WO2006/097497. The particle size is not critical but is preferably in the range 5 to 200 μm, more preferably 20 to 80 μm. The use of these supports is routine in the art.

In an alternative embodiment, no support is used at all. Such a catalyst can be prepared in solution, for example in an aromatic solvent like toluene, by contacting the metallocene (as a solid or as a solution) with the cocatalyst, for example methylaluminoxane or a borane or a borate salt previously dissolved in an aromatic solvent, or can be prepared by sequentially adding the dissolved catalyst components to the polymerisation medium.

In one embodiment, no external carrier is used but the catalyst is still presented in solid particulate form. Thus, no external support material, such as inert organic or inorganic carrier, for example silica as described above is employed.

In order to provide the catalyst of the invention in solid form but without using an external carrier, it is preferred if a liquid/liquid emulsion system is used. The process involves forming dispersing catalyst components (i) and (ii) in a solvent, and solidifying said dispersed droplets to form solid particles.

In particular, the method involves preparing a solution of one or more catalyst components; dispersing said solution in a solvent to form an emulsion in which said one or more catalyst components are present in the droplets of the dispersed phase; immobilising the catalyst components in the dispersed droplets, in the absence of an external particulate porous support, to form solid particles comprising the said catalyst, and optionally recovering said particles.

This process enables the manufacture of active catalyst particles with improved morphology, e.g. with a predetermined spherical shape, surface properties and particle size and without using any added external porous support material, such as an inorganic oxide, e.g. silica. By the term "preparing a solution of one or more catalyst components" is meant that the catalyst forming compounds may be combined in one solution, which is dispersed to the immiscible solvent, or, alternatively, at least two separate catalyst solutions for each part of the catalyst forming compounds may be prepared, which are then dispersed successively to the solvent. Full disclosure of the necessary process can be found in WO03/051934.

As noted above, the key to the invention is not the specific nature of the single site catalyst used and hence this may be chosen broadly however it is required that the second prepolymerisation process can be effected in the presence of the aluminium alkyl compound. The key to the invention is how the transitioning process is carried out.

## Polypropylene

The process of the invention produces a polypropylene polymer. The polypropylene polymer may be a polypropylene homopolymer or a polypropylene copolymer.

Propylene homopolymers made by the processes of the invention can be made with Mw (weight average molecular weight) values in the range of 40 to 2000 kg/mol, preferably in the range of 50 to 1 500 kg/mol depending on the use and amount of hydrogen used as Mw regulating agent. The catalysts of the invention enable the formation of polypropylene homopolymers with high melting points. In a preferred embodiment the propylene homopolymer formed by the process of the invention has a melting point of more than 149.0 °C, preferably more than 149.5°C, especially more than 150.0°C.

Polypropylene copolymers made by the processes of the invention are generally copolymers of propylene with ethylene or with C4 - C10 comonomers, especially with C6 comonomers.

In one preferred embodiment, the polypropylene is a polypropylene homopolymer.

## Process

The process according to the invention is a "flying" transition where the change from one type of produced polymer (the first polymer product herein) to another (the second polymer product) is continuous, that is without shutting down the reactors. When transitioning from a first to a second catalyst, the feed of the first catalyst is discontinued. Thereafter the second catalyst is introduced. In order to produce the second polymer product, it will be appreciated that the reactor conditions must be adapted relative to those used to produce the first polymer product. The change in the conditions can be effected before or after the second catalyst is introduced. Alternatively, some conditions might be changed before and others after the second catalyst is introduced.

The transition process of the invention is a multistage polymerisation process, i.e. a process involving two or

more stages (reactors) which are connected "in series". A multistage process in the context of the invention is defined to be a polymerisation process in which a polymer comprising two or more fractions is produced by producing each or at least two polymer fraction(s) in a separate reaction stage, usually with different reaction conditions in each stage, in the presence of the reaction product of the previous stage which comprises a polymerisation catalyst. The polymerisation reactions used in each stage may involve conventional propylene homopolymerisation or copolymerisation reactions, e.g. gas-phase, slurry phase, liquid phase polymerisations, using conventional reactors, e.g. loop reactors, gas phase reactors, batch reactors etc. (see for example WO97/44371 and WO96/18662).

A change from production of one grade of polymer to another typically requires a transition period for a polymerisation reactor to switch over to a new resin specification. Time is required to adjust the process conditions, such as reaction temperature, reactants and reactant concentration ratios etc, to allow the formation of the target new polymer. During a transition from a first polymerisation reaction intended to produce a first resin product meeting a first specification and a second polymerisation reaction intended to produce a second target resin product meeting a second specification, it will be clear that some "off-grade" polymer may be produced as the transition process occurs.

Unless the transition is implemented appropriately, such off-grade product may become sticky under the conditions (including temperature) present during the transition, and agglomeration or sheeting (on the reactor wall or dome) as well as product discharge problems can result. The formation of sticky polymer might force reactor shut down for cleaning. The process of the invention minimises this risk.

It will also be clear that the longer the transition, the more "off-grade" polymer may be produced and there is a commercial incentive to convert from a first to second polymer product as cleanly and quickly as possible.

The specific first and second polymerisation conditions depend on various factors such as the catalyst activity, type and amount of optional comonomer, type of polymer to be produced, and the production equipment. Consequently, the specific conditions during transition between Ziegler-Natta and single site catalysts have to be determined for each specific product in a particular plant. This is within the skills of the person skilled in the art.

As hereinbefore described, the process involves a first reactor and a second reactor, these may be considered the first and second polymerisation stages, respectively.

Preferably, the multistage process is a two-stage polymerisation process, optionally and preferably preceded by a prepolymerisation step.

The first polymerisation stage produces a propylene homopolymer or a propylene copolymer (the first polymer product), typically a propylene homopolymer, which is subsequently fed to the second polymerisation stage. The second polymerisation stage can produce a further propylene homopolymer, or a propylene copolymer (the second polymer product), preferably a propylene homopolymer.

The first polymerisation stage is preferably a slurry polymerisation step, thus the first reactor is preferably a slurry reactor, more preferably a loop reactor.

The slurry polymerisation usually takes place in an inert diluent, typically a hydrocarbon diluent such as methane, ethane, propane, n-butane, isobutane, pentanes, hexanes, heptanes, octanes etc., or their mixtures. Preferably the diluent is a low-boiling hydrocarbon having from 1 to 4 carbon atoms or a mixture of such hydrocarbons. An especially preferred diluent is propane, possibly containing minor amounts of methane, ethane and/or butane.

The ethylene content in the fluid phase of the slurry may be from 1 to 50 % by mole, preferably from 2 to 20 % by mole and in particular from 2 to 10 % by mole. The benefit of having a high ethylene concentration is that the productivity of the catalyst is increased but the drawback is that more ethylene then needs to be recycled than if the concentration was lower.

The temperature in the first polymerisation stage is typically from 50 to 110 °C (e.g. 60-100, or 70 to 110 °C), the reactor pressure will generally be in the range of 20 to 80 bar (e.g. 30-70 bar). An excessively high temperature should be avoided to prevent partial dissolution of the polymer into the diluent and the fouling of the reactor.

The slurry polymerisation may be conducted in any known reactor used for slurry polymerisation. Such reactors include a continuous stirred tank reactor and a loop reactor. It is especially preferred to conduct the slurry polymerisation in a loop reactor. In such reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654. It is thus preferred to conduct the first polymerisation stage as a slurry polymerisation in a loop reactor.

The slurry may be withdrawn from the reactor either continuously or intermittently. A preferred way of intermittent withdrawal is the use of settling legs where slurry is allowed to concentrate before withdrawing a batch of the concentrated slurry from the reactor. The use of settling legs is disclosed, among others, in US-A-3374211, US-A-3242150 and EP-A-1310295. Continuous withdrawal is disclosed, among others, in EP-A-891990, EP-A-1415999, EP-A-1591460 and WO-A-2007/025640. The continuous withdrawal is advantageously combined with a suitable concentration method, as disclosed in EP-A-1310295 and EP-A-1591460. It is preferred to withdraw the slurry from the first polymerisation stage continuously.

The average residence time in the first polymerisation stage will generally be in the range of 0.2 to 5.0 hours

(e.g. 0.3 to 2 hours) in the slurry reactor. Preferably the residence time is in the range of 0.2 to 1.0 hour, more preferably in the range of 0.3 to 0.6 hours. As it is well known in the art the average residence time $\tau$ can be calculated from Equation 1 below:

Equation 1: Residence time

$$\tau = \frac{V_R}{Q_o}$$

Where $V_R$ is the volume of the reaction space (in case of a loop reactor, the volume of the reactor, in case of the fluidized bed reactor, the volume of the fluidized bed) and $Q_o$ is the volumetric flow rate of the product stream (including the polymer product and the fluid reaction mixture).

The diluent used will generally be an aliphatic hydrocarbon having a boiling point in the range -70 to +100 °C. In such reactors, polymerisation may if desired be effected under supercritical conditions.

The production rate is suitably controlled with the catalyst feed rate. It is also possible to influence the production rate by suitable selection of the monomer concentration. The desired monomer concentration can then be achieved by suitably adjusting the ethylene feed rate.

In the second polymerisation stage, propylene is polymerised, optionally together with at least one other alpha-olefin comonomer, in the presence of a catalyst and the propylene polymer produced in the first polymerisation stage. It will thus be appreciated that the second polymerisation stage generates a propylene polymer, which combines with the propylene polymer from the first polymerisation stage. Preferable comonomers are discussed hereinbefore.

The second polymerisation stage is preferably a gas phase polymerisation step, i.e. carried out in a gas-phase reactor. Thus, the second reactor is preferably a gas phase reactor. Any suitable gas phase reactor known in the art may be used, such as a fluidised bed gas phase reactor.

For gas phase reactors, the reaction temperature used will generally be in the range of 50 to 130 °C (e.g. 60 to 115 °C, or 60 to 100 °C), the reactor pressure will generally be in the range of 5 to 60 bar, preferably 10 to 40 bar and the residence time will generally be 1 to 8 hours. The gas used will commonly be a non-reactive gas such as nitrogen or low boiling point hydrocarbons such as propane together with monomer (e.g. ethylene).

Hydrogen may be introduced into any reactor to control the molecular weight of the polymer as is well-known and routine in the art. In one embodiment, the mole ratio of hydrogen to total olefin monomer in the circulating gas stream is in a range of from 0.001 or 0.002 or 0.003 to 0.014 or 0.016 or 0.018 or 0.024, wherein a desirable range may comprise any combination of any upper mole ratio limit with any lower mole ratio limit described herein. Expressed another way, the amount of hydrogen in the reactor at any time may range from 1000 ppm to 20,000 ppm in one embodiment, and from 2000 to 10,000 in another embodiment, and from 3000 to 8,000 in yet another embodiment, and from 4000 to 7000 in yet another embodiment, wherein a desirable range may comprise any upper hydrogen limit with any lower hydrogen limit described herein.

The split between the first polymerisation stage and the second polymerisation stage (i.e. between the slurry polymerisation and the gas phase polymerisation) is typically 30:70 to 70:30, more preferably 35:65 to 65:35, most preferably 40:60 to 60:40.

Thus, a preferred embodiment of the invention is wherein the first reactor is a slurry reactor, such as a loop reactor, and the second reactor is a gas phase reactor, such as a fluidised bed gas phase reactor. A preferred "loop-gas phase"-process, such as developed by Borealis A/S, Denmark (known as BORSTAR® technology) is described e.g. in patent literature, such as in EP 0887 379, in WO92/12182 or in WO 2005/002744.

The polymerisation steps discussed above may be preferably preceded by a prepolymerisation step. The purpose of the prepolymerisation is to polymerise a small amount of polymer onto the catalyst at a low temperature and/or a low monomer concentration. By prepolymerisation it is possible to improve the performance of the catalyst in slurry and/or modify the properties of the final polymer. The prepolymerisation step is conducted in slurry.

Thus, the prepolymerisation step may be conducted in a loop reactor. The prepolymerisation is then preferably conducted in an inert diluent, typically a hydrocarbon diluent such as methane, ethane, propane, n-butane, isobutane, pentanes, hexanes, heptanes, octanes etc., or their mixtures. Preferably the diluent is a low-boiling hydrocarbon having from 1 to 4 carbon atoms or a mixture of such hydrocarbons.

The temperature in the prepolymerisation step is typically from 0 to 90 °C, preferably from 20 to 80 °C and more preferably from 55 to 75 °C.

The pressure is not critical and is typically from 1 to 150 bar, preferably from 40 to 80 bar.

The amount of monomer is typically such that from 0.1 to 1000 grams of monomer per one gram of solid catalyst component is polymerised in the prepolymerisation step. As the person skilled in the art knows, the catalyst particles recovered from a continuous prepolymerisation reactor do not all contain the same amount of prepolymer. Instead, each

particle has its own characteristic amount which depends on the residence time of that particle in the prepolymerisation reactor. As some particles remain in the reactor for a relatively long time and some for a relatively short time, then also the amount of prepolymer on different particles is different and some individual particles may contain an amount of prepolymer which is outside the above limits. However, the average amount of prepolymer on the catalyst typically is within the limits specified above.

The molecular weight of the prepolymer may be controlled by hydrogen as it is known in the art. Further, antistatic additives may be used to prevent the particles from adhering to each other or the walls of the reactor, as disclosed in WO-A-96/19503 and WO-A-96/32420.

In the process of the invention, the Ziegler-Natta catalysed polymerisation is preferably started as is known in the state of the art by introducing the Ziegler-Natta catalyst, as described above, via a catalyst feed tank, preferably via an oil catalyst feed system or via a wax catalyst feed system to a prepolymerisation reactor. Furthermore, propylene and hydrogen and optionally the cocatalyst and the external donor (whole amount or only part therefrom) are added to the prepolymerisation reactor.

Then the prepolymerized catalyst, additional propylene, hydrogen, optionally additional cocatalyst and external donor are introduced into the first reactor (typically a slurry reactor), afterwards recovering the polymerisation product from the slurry phase reactor and conducting it to a second reactor (typically a gas phase reactor), optionally feeding additional propylene and optional comonomer to the second reactor, optionally feeding additional hydrogen to the second reactor to control the hydrogen-to-propylene ratio to provide the desired molecular mass of the polymerisation product, recovering the polymerisation product from the second reactor.

The reaction conditions in the slurry phase and the gas phase reactor (like temperature, pressure, amount of propylene and optional comonomers, amount of hydrogen) are chosen according to the desired product parameters of the first product. In general, such a process is conventional.

The Ziegler-Natta catalyst components are preferably all introduced to the prepolymerisation step when a prepolymerisation step is present. However, where the solid catalyst component and the cocatalyst can be fed separately it is possible that only a part of the cocatalyst is introduced into the prepolymerisation stage and the remaining part into subsequent polymerisation stages. Also in such cases it is necessary to introduce so much cocatalyst into the prepolymerisation stage that a sufficient polymerisation reaction is obtained therein.

The process of the invention will be understood to be a continuous process.

The process for a "flying" transition from the Ziegler-Natta catalysed polymerisation to the single site catalysed polymerisation according to the invention is further described below.

During the Ziegler-Natta catalysed polymerisation, a single site catalyst, e.g. as described above, may be introduced into a catalyst feed tank that connects to the prepolymerisation reactor. Typically, the catalyst is prepared about 130 to 400 mins before its desired introduction into the prepolymerisation reactor.

It is possible that before introducing the single site catalyst into the prepolymerisation reactor, the reaction conditions in the prepolymerisation and first reactors are adapted to reflect those required to produce the second polymer product. Thus, the hydrogen concentration in the prepolymerisation and first reactors may be adjusted. The temperature within the prepolymerisation and first reactors may be adjusted and so on. Such adjustments within the prepolymerisation and first reactors may occur about 15 to 100 mins before the single site catalyst is introduced into the first reactor. It is preferred if the hydrogen feed into the second reactor is adjusted to reflect that required to produce the second polymer product before the introduction of the single site catalyst.

It is preferred if adjustments to any other polymerisation conditions required to target the second polymer product (e.g. monomer content, temperature) occurs after introduction of the single site catalyst to the second reactor.

Where adjustments in conditions are needed in both prepolymerisation and first reactors, the order of adjustment does not matter. It may be that the prepolymerisation conditions are adjusted first or the first reactor conditions are adjusted first or that adjustment occurs simultaneously.

In general, a first polymerisation is conducted in a first reactor, preferably as bulk slurry polymerisation, e.g. in a continuous stirred tank reactor (CSTR) or loop reactor, in liquid propylene, i.e. the liquid phase mainly comprises propylene, with minor amount of other reactants and optionally inert components dissolved therein. The first polymerisation is carried out in the presence of the Ziegler-Natta catalyst, together with an external donor and co-catalyst as hereinbefore defined. The conditions in the first reactor may be as hereinbefore defined for slurry reactors.

At a defined time point, the feed of the Ziegler-Natta catalyst is discontinued.

After this step, and after a time period of at least 5 minutes, such as 5 to 60 minutes, preferably 10 to 55 minutes, more preferably 20 to 50 minutes, the feed of an external donor to the Ziegler-Natta catalyst to the first reactor is discontinued and the feed of a Ziegler-Natta co-catalyst into the first reactor is reduced. The feed of the co-catalyst is typically reduced to a level of less than 25%, preferably less than 10%, of the feed prior to the discontinuation of the feed of the Ziegler-Natta catalyst.

In one embodiment, the feed of the Ziegler-Natta co-catalyst is reduced to 1 to 5 wt-ppm calculated from the total weight of the propylene (C3) feed, i.e. 1 to 5 g of the co-catalyst to 1000 kg of propylene.

As a next step the solid content of a second reactor is reduced from a first operating level to a transitioning level in the range of 40 to 80%, relative to the first operating level.

The solid content of the second reactor is typically reduced by lowering the height of the bed of the polymer particles (or level of the bed of the polymer particles) from a first operating level to a transitioning level. Bed height is conventionally lowered by increasing the product discharge rate from the reactor to downstream equipment e.g. a purge bin. Other conventional techniques for lowering the height of the bed of the polymer particles are known in the art.

The initial solid content, or level of the bed of the polymer particles is considered to be the normal level as measured during steady state operations of the Ziegler-Natta polymerisation i.e. the first operating level. In a preferable embodiment, the solid content, or the level of the bed of the polymer particles, is reduced to a transitioning level which is 60 to 75% of the first operating level.

After a time period of at least 30 minutes, such as 30 minutes to 2 hours, preferably 45 minutes to 1.5 hours, the single site catalyst is introduced into the first reactor.

As a final step, the solid content of the second reactor is increased to a second operating level, i.e. the normal level as measured during steady state operations of the single site polymerisation. The first operating level and the second operating level are preferably the same.

The Ziegler-Natta catalyst and single site catalyst components are both introduced to the first reactor. It will be understood that once added to the first reactor, the single site catalyst will be fed to the second reactor, to carry out a second polymerisation in that reactor.

The polymer produced in the first reactor is typically continuously fed to the second reactor throughout the process.

The precise control of the polymerisation conditions and reaction parameters is within the skill of the art. The pressure and temperature of the second reactor are typically kept essentially constant throughout the process.

The process of the invention is ideally carried out in the absence of any additional agent, which deactivates or kills the Ziegler-Natta catalyst.

## Determination Methods

The following definitions of terms and determination methods apply for the above general description of the invention as well as to the below examples unless otherwise defined.

**Melt flow rate ($MFR_2$) (230 °C)** is measured according to ISO 1133 (230 °C, 2.16 kg load).

**Bulk Density:** The bulk density of the polymer powder was determined according to ASTM D1895-96, method A.

**Number average molecular weight ($M_n$), weight average molecular weight ($M_w$) and molecular weight distribution (MWD)** are determined by Gel Permeation Chromatography (GPC) according to the following method:

The weight average molecular weight Mw and the molecular weight distribution (MWD = Mw/Mn wherein Mn is the number average molecular weight and Mw is the weight average molecular weight) is measured by a method based on ISO 16014-1:2003 and ISO 16014-4:2003. A Waters Alliance GPCV 2000 instrument, equipped with refractive index detector and online viscosimeter was used with 3 x TSK-gel columns (GMHXL-HT) from TosoHaas and 1,2,4-trichlorobenzene (TCB, stabilized with 200 mg/L 2,6-Di tert butyl-4-methyl-phenol) as solvent at 145 °C and at a constant flow rate of 1 mL/min. 216.5 μL of sample solution were injected per analysis. The column set was calibrated using relative calibration with 19 narrow MWD polystyrene (PS) standards in the range of 0.5 kg/mol to 11 500 kg/mol and a set of well characterised broad polypropylene standards. All samples were prepared by dissolving 5-10 mg of polymer in 10 mL (at 160 °C) of stabilized TCB (same as mobile phase) and keeping for 3 hours with continuous shaking prior sampling in into the GPC instrument.

**Particle size (PS) and Average Particle Size (APS)** were measured according to ISO 13322-2 using Image analysis methods using a Camsizer P4 analyser.

**Comonomer content** was determined in a known manner based on Fourier transform infrared spectroscopy (FTIR) determination using Nicolet Magna 550 IR spectrometer together with Nicolet Omnic FTIR software calibrated with $^{13}C$-NMR.

## DSC analysis

Melting temperature Tm and crystallization temperature Tcr was measured on approx. 5 mg samples with a Mettler-Toledo 822e differential scanning calorimeter (DSC), according to ISO11357-3 in a heat/cool/heat cycle with a scan rate of 10 °C/min in the temperature range of +23 to +225 °C under a nitrogen flow rate of 50 ml min-1. Melting temperature was taken as the endotherm peak, respectively in the second heating step. Calibration of the instrument was performed with H20, Lead, Tin, Indium, according to ISO 11357-1.

**Xylene solubles**

The xylene soluble fraction (XS) as defined and described in the present invention was determined as follows: 2.0 g of the polymer were dissolved in 250 mm p-xylene at 135 °C under agitation. After 30 minutes, the solution was allowed to cool for 15 minutes at ambient temperature and then allowed to settle for 30 minutes at 25 ± 0.5 °C. The solution was filtered with filter paper into two 100 mm flasks. The solution from the first 100 mm vessel was evaporated in nitrogen flow and the residue dried under vacuum at 90 °C until constant weight is reached. The xylene soluble fraction (percent) can then be determined as follows:

$$XS\% = (100 \times m_1 \text{ X } v_0)/(m_0 \times v_1),$$

wherein $m_0$ designates the initial polymer amount (grams), $m_1$ defines the weight of residue (grams), $v_0$ defines the initial volume (milliliter) and $v_1$ defines the volume of the analysed sample (milliliter).

**Examples**

In the polymerisations exemplified below two types of catalysts were used, a metallocene catalyst and a Ziegler-Natta catalyst.

Catalysts

**A) Single-site catalyst**

The single-site catalyst used in the polymerisation process for all examples was *Anti*-dimethylsilanediyl[2-methyl-4,8-di(3,5-dimethylphenyl)-1,5,6,7-tetrahydro-s-indacen-1-yl][2-methyl-4-(3,5-dimethylphenyl)-5-methoxy-6-tert-butylinden-1-yl] zirconium dichloride as disclosed in WO2019/179959 A1 as MC-2. The supported metallocene catalyst was produced analogously to IE2 in WO2019/179959 A1.

**B) Ziegler-Natta catalyst**

A Ziegler Natta catalyst used in the examples was produced as follows:

*Raw materials*

$TiCl_4$ (CAS 7550-45-90) was supplied by commercial source.

20 % solution in toluene of butyl ethyl magnesium (Mg(Bu)(Et)), provided by Crompton

2-ethylhexanol, provided by Merck Chemicals

3-Butoxy-2-propanol, provided by Sigma-Aldrich

bis(2-ethylhexyl)citraconate, provided by Contract Chemicals

Viscoplex® 1-254, provided by Evonik

Heptane, provided by Chevron

*Preparation of Mg complex*

3,4 litre of 2-ethylhexanol and 810 ml of propylene glycol butyl monoether (in a molar ratio 4/1) were added to a 20 l reactor. Then 7,8 litre of a 20 % solution in toluene of BEM (butyl ethyl magnesium) provided by Crompton GmbH was slowly added to the well stirred alcohol mixture. During the addition the temperature was kept at 10 °C. After addition the temperature of the reaction mixture was raised to 60 °C and mixing was continued at this temperature for 30 minutes. Finally, after cooling to room temperature the obtained Mg-alkoxide was transferred to storage vessel.

21,2 g of Mg alkoxide prepared above was mixed with 4,0 ml bis(2-ethylhexyl) citraconate for 5 min. After mixing the obtained Mg complex was used immediately in the preparation of catalyst component.

*Preparation of catalyst component*

19,5 ml titanium tetrachloride was placed in a 300 ml reactor equipped with a mechanical stirrer at 25°C. Mixing speed was adjusted to 170 rpm. 26,0 of Mg-complex prepared above was added within 30 minutes keeping the temperature at 25 °C . 3,0 ml of Viscoplex 1-254 and 24,0 ml of heptane were added to form an emulsion. Mixing was continued for 30 minutes at 25 °C. Then the reactor temperature was raised to 90°C within 30 minutes. The reaction mixture was stirred for further 30 minutes at 90°C. Afterwards stirring was stopped and the reaction mixture was allowed to settle for 15 minutes at 90°C.solid material was washed with 100 ml of toluene, with of 30 ml of TiCl4, with 100 ml of toluene and two times with 60 ml of heptane. I ml of donor was added to the two first washings. Washings were made at 80 °C under stirring 30 min with 170 rpm. After stirring was stopped the reaction mixture was allowed to settle for 20-30 minutes and followed by siphoning.

Afterwards stirring was stopped and the reaction mixture was allowed to settle for 10 minutes decreasing the temperature to 70°C with subsequent siphoning, and followed by $N_2$ sparging for 20 minutes to yield an air sensitive powder. Catalyst has a surface area measured by BET method below 5 $m^2/g$, i.e. below the detection limit.

Transitioning Procedure

The examples were carried out in Pilot scale. The purpose was to simulate the catalyst fly transition from Ziegler-Natta catalyst to metallocene catalyst with GPR bed level, the target GPR bed level on full scale is about 6 - 12 m (in Pilot 60 -120 cm) for the transition.

In IE1 and IE2, the transition from Ziegler-Natta (ZN) → Metallocene, was carried out. The procedure was as following:

- At 0h, ZN catalyst feed was stopped, with TEAL/donor feeding kept. TEAL 150 g/t i.e. 150 g/1000 kg, and D-Donor 20 g/t, i.e. 20 g/1000kg. At this point Span 80 feed was started 2 wt-ppm.
- + 45 minutes. Donor feed was stopped, TEAL feed was reduced to 2 g/t C3, loop was controlled to T to 70°C, and GPR 80°C.
- Polymer slurry was lead still to GPR1. Bed level was reduced from 160 cm to 120 cm (12 m in the full scale), Fluidization, pressure and temperature were kept normal.
- + 1½h. Loops was empty, and the target GPR bed level reached (120 cm), metallocene feed was started. Loop was lead to dump tank during the production rate ramp up. When the loop density was 470 kg/m3, the polymer slurry was turned to start loop to GPR mass transfer.
- + 6h. GPR bed level was increased to 160 cm (16m in the full scale). Samples were taken according to the normal frequency.
- + 9,5h. Lot collection was started.

Catalyst change went well and as planned. Polymerisation conditions and resulting polymer properties for this Example are also shown in Table 1. Figure 1 shows the loop and GPR production rates. Black trend line is production rate of loop and white trend line is proportional production rate of GPR. ZN catalyst feed stop at 12:00, metallocene catalyst in at 13:45. Split before change 55/45% and productivity 36 kg PP / g cat with ZN catalyst. Split 12 hours after change 70/30% and productivity kg PP/ g cat with metallocene catalyst.

A reference example was also carried out in which transition from Ziegler-Natta (ZN) to Ziegler-Natta, was carried out. An identical procedure to that for IE1 and IE2 was followed except that at the +1½ time point, the ZN catalyst was reintroduced to the first reactor. Polymerisation conditions and resulting polymer properties for this Example are also shown in Table 1.

**Table 1: Reference and Inventive Examples, Polymerisation conditions**

| **Example** | **Reference** | **IE1** | **IE2** |
|---|---|---|---|
| | | | |
| **Prepolymerisation reactor** | | | |
| Temp. (°C) | 20 | 20 | 20 |
| Press. (kPa) | 5063 | 5095 | 5103 |

(continued)

| | | | |
|---|---|---|---|
| **Prepolymerisation reactor** | | | |
| Propylene feed (kg/h) | 65 | 65 | 65 |
| Catalyst feed (g/h) | 1.9 | 3.8 | 3.8 |
| TEAL feed (g/ t C3) | 150.0 | 2.5 | 2.5 |
| H2 (g/h) | 1.0 | 0.1 | 0.1 |
| Feed H2/C3 ratio (mol/kmol) | 0.30 | 0.03 | 0.03 |
| Feed C2/C3 ratio (mol/kmol) | 0.01 | 0.01 | 0.01 |
| Residence time (h) | 0.35 | 0.36 | 0.36 |
| **Loop reactor** | | | |
| Temp. (°C) | 70 | 70 | 70 |
| Press. (kPa) | 4881 | 5027 | 5017 |
| C3 feed (Prepoly + Loop) (kg/h) | 178.5 | 179.4 | 179.4 |
| H2 feed B1 + B2(g/h) | 52.0 | 0.8 | 0.9 |
| Calculated H2/C3 ratio (mol/kmol) | 7.36 | 0.12 | 0.12 |
| Feed H2/C3 ratio (mol/kmol) | 6.06 | 0.10 | 0.10 |
| Production rate (kg/h) | 36.0 | 34.4 | 34.2 |
| Solid Concentration (wt.-%) | 31.0 | 32.0 | 33.0 |
| Polymer Split (wt.-%) | 53 | 69 | 70 |
| Polymer residence time (h) | 0.50 | 0.50 | 0.50 |
| Catalyst productivity after loop (kg/g cat) | 19.4 | 9.5 | 9.5 |
| Catalyst activity (kg/g cat * h) | 38.9 | 19.1 | 19.1 |
| XS (wt-%) | 4.3 | 1.1 | 1.1 |
| APS (mm) | 1.1 | 0.8 | 0.8 |
| Bulk Density (kg/m3) | 445 | 360 | 361 |
| **Gas phase reactor** | | | |
| Temp. (°C) | 80 | 80 | 80 |
| Press. (kPa) | 2499 | 2500 | 2500 |
| H2/C3 ratio (mol/kmol) | 55.00 | 1.86 | 1.81 |
| Residence time (h) | 2.0 | 2.0 | 2.0 |
| Polymer Split (wt.-%) | 47 | 31 | 30 |
| MFR2 (g/10 min) | 81.2 | 4.0 | 3.8 |
| XS (wt-%) | 3.00 | 1.20 | 0.58 |
| Total Production rate from Silo(kg/h) | 68.3 | 50.0 | 49.0 |
| Total productivity (kg PP/g cat) | 36.0 | 13.1 | 13.0 |
| **Final PP powder** | | | |
| MFR2 (g/10 min) | 78.6 | 5.6 | 3.5 |
| XS (wt-%) | 3.2 | 1.4 | 0.55 |
| Bulk Density (kg/m3) | 456 | 379 | 372 |
| PS < 0,106 mm | 0.2 | 0.0 | 0.0 |

(continued)

| Final PP powder | | | |
|---|---|---|---|
| PS> 0,106 mm | 1.2 | 0.9 | 0.9 |
| PS > 0,250 mm | 1.2 | 2.8 | 3.5 |
| PS > 0,355 mm | 29.7 | 45.1 | 53.2 |
| PS > 0,850 mm | 63.1 | 49.9 | 42.3 |
| PS > 2,0 mm | 4.5 | 1.4 | 0.1 |
| PS > 4,0 mm | 0.0 | 0.0 | 0.0 |
| APS (mm) | 1.20 | 1.10 | 1.10 |
| Tm (°C) | 161.3 | 154.9 | 154.3 |
| Tcr(°C) | 119.6 | 114.3 | 113.6 |

## Claims

1. A process for transitioning between a Ziegler-Natta catalyst and a single site catalyst during the production of a polypropylene homo- or copolymer in a continuous multistage polymerisation reaction, wherein the process comprises the following steps, in sequential order:

   a) polymerising propylene and optionally comonomers in a first reactor and thereafter in a second reactor in the presence of the Ziegler-Natta catalyst;
   b) discontinuing the feed of the Ziegler-Natta catalyst into the first reactor;
   c) discontinuing the feed of an external donor to the Ziegler-Natta catalyst and reducing the feed of a Ziegler-Natta co-catalyst into the first reactor, wherein step c) takes place at least 5 minutes, preferably 5 to 60 minutes, after step b);
   d) reducing solid content of the second reactor from a first operating level to a transitioning level in the range of 40 to 80%, relative to the first operating level prior to step d);
   e) introducing the single site catalyst into the first reactor, wherein step e) takes place at least 30 minutes, preferably 30 minutes to 2 hours, after step d); and
   f) increasing solid content of the second reactor to a second operating level, preferably to the same level as prior to step d).

2. The process as claimed in claim 1, wherein the transition is performed in the absence of any additional agent which deactivates or kills the Ziegler-Natta catalyst.

3. The process as claimed in claim 1 or 2, wherein the polypropylene homo- or copolymer is continuously fed from the first reactor to the second reactor.

4. The process as claimed in any of claims 1 to 3, wherein the first reactor is a slurry reactor, preferably a slurry loop reactor.

5. The process as claimed in any of claims 1 to 4, wherein the second reactor is a gas phase reactor, preferably a fluidised bed gas phase reactor.

6. The process as claimed in any of claims 1 to 5, wherein the Ziegler-Natta catalyst is a solid Ziegler-Natta catalyst selected from a $MgCl_2$-supported titanium Ziegler Natta catalyst and a self-supported solid Ziegler Natta catalyst.

7. The process as claimed in any of claims 1 to 6, wherein the external donor to the Ziegler-Natta catalyst is selected from the group consisting of ethers, ketones, amines, alcohols, phenols, phosphines, esters and silanes.

8. The process as claimed in any of claims 1 to 7, wherein the Ziegler-Natta co-catalyst is an aluminium trialkyl or aluminium alkyl halide compound, wherein alkyl groups preferably contain 1 to 20 C-atoms, more preferably 1 to 10 C-atoms.

**9.** The process as claimed in any of claims 1 to 8, wherein in step c) the feed of the Ziegler-Natta co-catalyst is reduced to a level of less than 25%, preferably less than 10%, of the feed prior to the discontinuation of the feed of the Ziegler-Natta catalyst, more preferably 1 to 5 wt-ppm calculated from the total weight of the propylene feed.

**10.** The process as claimed in any of claims 1 to 9, wherein the single site catalyst is a metallocene catalyst, preferably a supported metallocene catalyst.

**11.** The process as claimed in claim 10, wherein the metallocene catalyst comprises as a catalyst component an organometallic compound (C) of formula (Ia):

$$(L)_2R_nMX_2 \qquad \text{(Ia)}$$

wherein

"M" is Zr or Hf;
each "X" is a σ-ligand;
each "L" is an optionally substituted cyclopentadienyl, indenyl or tetrahydroindenyl;
"R" is $SiMe_2$ bridging group linking said organic ligands (L);
"n" is 0 or 1, preferably 1.

**12.** The process as claimed in claim 10 or 11, wherein the metallocene catalyst is used in combination with a boron containing cocatalyst and/or an aluminoxane cocatalyst.

**13.** The process as claimed in any of claims 1 to 12, wherein the pressure and temperature of the second reactor remain essentially constant during said process.

**14.** The process as claimed in any of claims 1 to 13, wherein the residence time in the first reactor is 0.2 h to 5.0 h.

**15.** The process as claimed in any of claims 1 to 14, wherein the polypropylene is a propylene homopolymer.

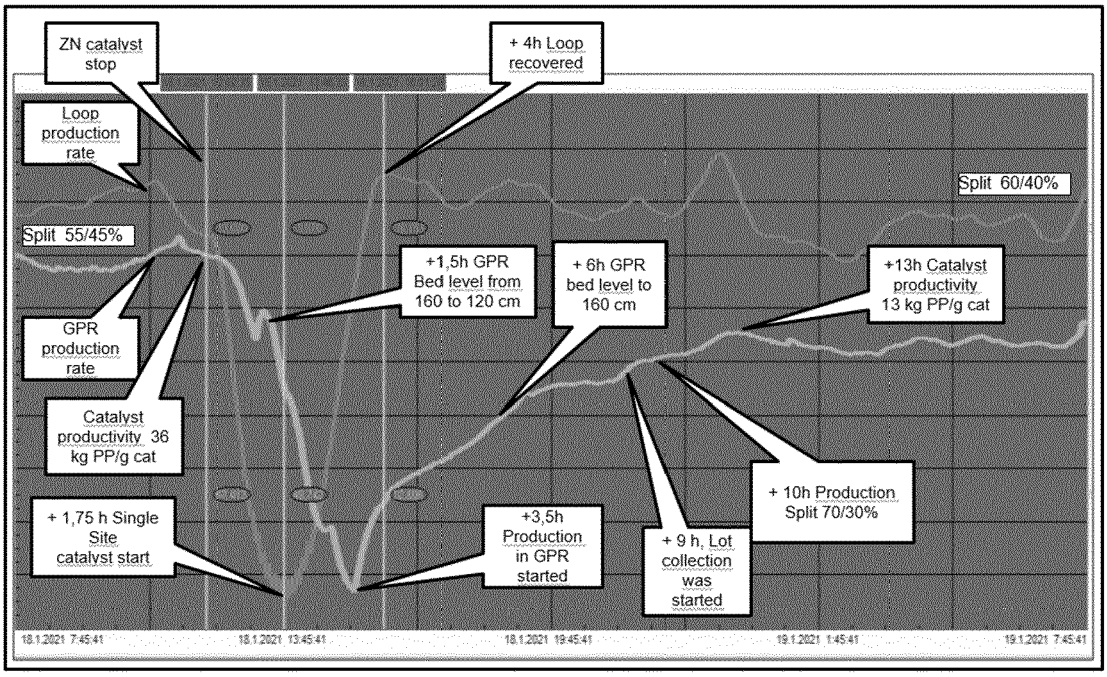
ZN catalyst stop
+ 4h Loop recovered
Loop production rate
Split 60/40%
Split 55/45%
+1,5h GPR Bed level from 160 to 120 cm
+ 6h GPR bed level to 160 cm
+13h Catalyst productivity 13 kg PP/g cat
GPR production rate
Catalyst productivity 36 kg PP/g cat
+ 10h Production Split 70/30%
+ 1,75 h Single Site catalyst start
+3,5h Production in GPR started
+ 9 h, Lot collection was started
18.1.2021 7:45:41
18.1.2021 13:45:41
18.1.2021 19:45:41
19.1.2021 1:45:41
19.1.2021 7:45:41

FIG 1

Europäisches Patentamt
European Patent Office
Office européen des brevets

# EUROPEAN SEARCH REPORT

Application Number
EP 22 21 5188

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 216 347 A1 (BOREALIS AG [AT]) 11 August 2010 (2010-08-11) * paragraphs [0001], [0009], [0151] - [0159] * * examples 1-5 * * claims 1-15 * ----- | 1-15 | INV. C08F2/00 C08F4/649 C08F4/6592 C08F210/06 |
| A | EP 1 316 566 B1 (FINA TECHNOLOGY [US]) 30 March 2005 (2005-03-30) * paragraphs [0001], [0004], [31ff.] * * claims 1-8 * ----- | 1-15 | |
| A | EP 3 237 458 B1 (SABIC GLOBAL TECHNOLOGIES BV [NL]) 22 June 2022 (2022-06-22) * paragraphs [0001], [0012] * * claims 1-12 * ----- | 1-15 | |

TECHNICAL FIELDS SEARCHED (IPC)

C08F

The present search report has been drawn up for all claims

| Place of search | Date of completion of the search | Examiner |
|---|---|---|
| Munich | 5 May 2023 | Neumeier, Michael |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 22 21 5188

This annex lists the patent family members relating to the patent documents cited in the above-mentioned European search report. The members are as contained in the European Patent Office EDP file on
The European Patent Office is in no way liable for these particulars which are merely given for the purpose of information.

05-05-2023

| Patent document cited in search report | Publication date | Patent family member(s) | Publication date |
|---|---|---|---|
| EP 2216347 A1 | 11-08-2010 | EP 2216347 A1 | 11-08-2010 |
| | | WO 2010086392 A1 | 05-08-2010 |
| EP 1316566 B1 | 30-03-2005 | AT 292149 T | 15-04-2005 |
| | | AT 402963 T | 15-08-2008 |
| | | BR 0204898 A | 15-06-2004 |
| | | CN 1422875 A | 11-06-2003 |
| | | CN 1763109 A | 26-04-2006 |
| | | DE 60203472 T2 | 27-04-2006 |
| | | EP 1316566 A2 | 04-06-2003 |
| | | EP 1526143 A2 | 27-04-2005 |
| | | ES 2238542 T3 | 01-09-2005 |
| | | JP 4627965 B2 | 09-02-2011 |
| | | JP 2003192717 A | 09-07-2003 |
| | | KR 20030045647 A | 11-06-2003 |
| | | MX PA02011729 A | 22-09-2003 |
| | | TW I258483 B | 21-07-2006 |
| | | US 2003114608 A1 | 19-06-2003 |
| | | US 2005159563 A1 | 21-07-2005 |
| | | US 2005165181 A1 | 28-07-2005 |
| | | US 2008114135 A1 | 15-05-2008 |
| | | US 2011207898 A1 | 25-08-2011 |
| EP 3237458 B1 | 22-06-2022 | BR 112017013299 A2 | 02-01-2018 |
| | | CN 107207650 A | 26-09-2017 |
| | | EA 201791427 A1 | 31-01-2018 |
| | | EP 3237458 A1 | 01-11-2017 |
| | | JP 2018501395 A | 18-01-2018 |
| | | KR 20170109548 A | 29-09-2017 |
| | | US 2018186906 A1 | 05-07-2018 |
| | | WO 2016102546 A1 | 30-06-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0604993 A
- WO 9214766 A
- US 4460755 A
- WO 9526370 A
- US 6949612 B
- WO 2010086392 A
- WO 8707620 A
- WO 9221705 A
- WO 9311165 A
- WO 9311166 A
- WO 9319100 A
- WO 9736939 A
- WO 9812234 A
- WO 9933842 A
- WO 03000756 A
- WO 03000757 A
- WO 03000754 A
- WO 03000755 A
- WO 2004029112 A
- EP 2610271 A
- WO 2012007430 A
- WO 9219659 A
- WO 9219653 A
- WO 9219658 A
- US 4382019 A
- US 4435550 A
- US 4465782 A
- US 4473660 A
- US 4560671 A
- US 5539067 A
- US 5618771 A
- EP 45975 A
- EP 45976 A
- EP 45977 A
- WO 9532994 A
- US 4107414 A
- US 4186107 A
- US 4226963 A
- US 4347160 A
- US 4472524 A
- US 4522930 A
- US 4530912 A
- US 4532313 A
- US 4657882 A
- US 4581342 A
- EP 629631 A
- EP 629632 A
- WO 0026266 A
- WO 02002576 A
- WO 02002575 A
- WO 9912943 A
- WO 9840331 A
- EP 776913 A
- EP 1074557 A
- WO 9942497 A
- EP 2402353 A
- EP 2729479 A
- EP 2746289 A
- WO 0170395 A
- WO 9710248 A
- WO 9941290 A
- WO 9910353 A
- EP 260130 A
- WO 9728170 A
- WO 9846616 A
- WO 9849208 A
- WO 98040331 A
- WO 9912981 A
- WO 9919335 A
- WO 9856831 A
- WO 0034341 A
- WO 00148034 A
- EP 423101 A
- EP 537130 A
- WO 200202576 A
- WO 2005105863 A
- WO 2006097497 A
- WO 2007116034 A
- WO 2007107448 A
- WO 2009027075 A
- WO 2009054832 A
- WO 2012001052 A
- EP 2532687 A
- WO 2011135004 A
- WO 2012084961 A
- WO 2011076780 A
- WO 2015158790 A
- WO 9414856 A
- WO 9512622 A
- WO 03051934 A
- WO 9744371 A
- WO 9618662 A
- US 4582816 A
- US 3405109 A
- US 3324093 A
- EP 479186 A
- US 5391654 A
- US 3374211 A

- US 3242150 A
- EP 1310295 A
- EP 891990 A
- EP 1415999 A
- EP 1591460 A
- WO 2007025640 A
- EP 0887379 A
- WO 9212182 A
- WO 2005002744 A
- WO 9619503 A
- WO 9632420 A
- WO 2019179959 A1


**Non-patent literature cited in the description**


- **V. C. GIBSON et al.** *Angew. Chem. Int. Ed.,* 1999, vol. 38, 428-447